# EUROPEAN PATENT APPLICATION

(11) **EP 4 559 984 A1**
(43) Date of publication of application: **28.05.2025**
(21) Application number: 24846633.6
(22) Date of filing: 04.10.2024
(51) Int. Cl.: C09D 127/18, C09D 163/00, C09D 179/08, C23C 26/00

(54) **COATING COMPOSITION, FILM, ARTICLE, AND BEARING**

(30) Priority: 04.10.2023 JP 2023172991
(71) Applicant: Daikin Industries, Ltd., Osaka-shi, Osaka 530-0001 (JP)
(72) Inventor: KADOWAKI, Yu, Osaka-shi, Osaka 5300001 (JP); NAKATANI, Yasukazu, Osaka-shi, Osaka 5300001 (JP)
(74) Representative: Goddar, Heinz J.
(86) International application number: PCT/JP2024/035646
(87) International publication number: WO 2025/075160

(57) **Abstract**

Provided is a coating material composition that is capable of forming a coating film excellent in electric corrosion prevention and low friction.

A coating material composition containing: a fluororesin (A) containing a high molecular weight polytetrafluoroethylene (A-1) as a part or as a whole; a polyamideimide resin and/or epoxy resin (B); and an organic solvent (C).

## Description

### Technical Field

The present disclosure relates to a coating material composition, a film, an article, and a bearing.

### Background Art

Patent Literatures 1 to 4 describe that coating is performed on bearings. In recent years, electric automobiles have shown great expansion. The bearings described in these literatures have not been examined for problems when used in such electric automobiles.

Patent Literature 5 discloses a coating material that can maintain abrasion resistance and a sliding property in automobile air-conditioner compressor pistons.

### Citation List

### Patent Literature

Patent Literature 1: Japanese Patent Laid-Open No. 2000-15720
Patent Literature 2: Japanese Translation of PCT International Application Publication No. 2022-42162
Patent Literature 3: Japanese Patent Laid-Open No. 2008-280485
Patent Literature 4: Japanese Patent Laid-Open No. 2013-85441
Patent Literature 5: Japanese Patent Laid-Open No. 2005-198372
Patent Literature 6: Japanese Patent Laid-Open No. 2022-15680

### Summary of Invention

### Technical Problem

An object of the present disclosure is to provide a coating material composition that is capable of forming a coating film that is electric corrosion preventive and is also excellent in abrasion resistance due to low friction.

### Solution to Problem

The present disclosure is a coating material composition containing: a fluororesin (A) containing a high molecular weight polytetrafluoroethylene (A-1) as a part or as a whole; a polyamideimide resin and/or epoxy resin (B); and an organic solvent (C).

The fluororesin (A) preferably further contains one or more copolymers (A-2) composed of tetrafluoroethylene, and hexafluoropropylene and/or a perfluoroalkyl vinyl ether.

The copolymer (A-2) preferably has a melt flow rate of 1 to 30 (g/10 min).

In the above coating material composition, the mass ratio between the above high molecular weight polytetrafluoroethylene (A-1) and the copolymer (A-2) is preferably (A-1)/(A-2) = 10/90 to 90/10.

In the above coating material composition, the mass ratio between the fluororesin (A) and the polyamideimide resin is preferably fluororesin (A) /polyamideimide resin = 40/60 to 70/30.

The polyamideimide resin preferably has a number-average molecular weight of 10,000 to 40,000.

In the above coating material composition, the mass ratio between the fluororesin (A) and the epoxy resin is preferably fluororesin (A)/epoxy resin = 30/70 to 70/30.

In the above coating material composition, the epoxy resin preferably has a number-average molecular weight of 200 to 2,500.

In the above coating material composition, it is preferable that the polyamideimide resin and/or epoxy resin (B) is a polyamideimide resin, that the fluororesin (A) further contains one or more copolymers (A-2) composed of tetrafluoroethylene, and hexafluoropropylene and/or a perfluoroalkyl vinyl ether, that the copolymer (A-2) has a melt flow rate of 1 to 30 (g/10 min), that the mass ratio between the high molecular weight polytetrafluoroethylene (A-1) and the copolymer (A-2) is (A-1)/(A-2) = 5/95 to 55/45, that the mass ratio between the fluororesin (A) and the polyamideimide resin is fluororesin (A) /polyamideimide resin = 40/60 to 70/30, and that the polyamideimide resin has a number-average molecular weight of 10,000 to 40,000.

In the above coating material composition, it is preferable that the polyamideimide resin and/or epoxy resin (B) is an epoxy resin, that the fluororesin (A) further contains one or more copolymers (A-2) composed of tetrafluoroethylene, and hexafluoropropylene and/or a perfluoroalkyl vinyl ether, that the copolymer (A-2) has a melt flow rate of 1 to 30 (g/10 min), that the mass ratio between the high molecular weight polytetrafluoroethylene (A-1) and the copolymer (A-2) is (A-1)/(A-2) = 5/95 to 55/45, that the mass ratio between the fluororesin (A) and the epoxy resin is fluororesin (A)/epoxy resin = 30/70 to 70/30, and that the epoxy resin has a number-average molecular weight of 200 to 2,000.

The present disclosure is also a film formed of the coating material composition described above.

The present disclosure is also an article having the above film.

The present disclosure is also a bearing having the above film.

The present disclosure is also an article having the above bearing.

### Advantageous Effects of Invention

The coating material composition of the present disclosure is capable of forming a coating film that is electric corrosion preventive and is also excellent in abrasion resistance due to low friction.

### Description of Embodiments

The present disclosure will be described in detail below.

Bearings have been widely used in the automotive field. Meanwhile, electric automobiles have shown expansion in the market in recent years, and bearings have also been widely used in electric automobiles.

There are some cases where electricity flows through the bearings used in electric automobiles. Meanwhile, when electricity flows through the bearings, it causes a phenomenon that is called electric corrosion. This is a phenomenon in the bearings in which the passage of an electric current causes sparking and melting of the metal surface, resulting in loss of surface smoothness. Note that the electric corrosion in the present disclosure is a phenomenon completely different from the phenomenon in which corrosion of one metal is promoted when different types of metals come into contact with each other in a corrosive environment, causing electron conduction (galvanic corrosion).

In order to prevent such electric corrosion, it is preferable to increase the insulation of the bearings. For this reason, it is considered to form an insulating coating film by means of a coating material. In order to prevent electric corrosion, it is necessary to form a film that is excellent in insulation and has abrasion resistance. This is because low abrasion resistance is likely to expose the substrate due to abrasion of the coating film, thereby causing electricity to flow through the bearings and electric corrosion to occur. Also, this is because abrasion of the coating film generates abrasion powder, which itself may become a foreign matter and become a factor that inhibits rotation of the bearings. In order to obtain abrasion resistance, it is necessary to have low friction.

The coating material composition of the present disclosure exhibits particularly excellent performance in coating of such bearings.

### (Fluororesin (A))

The coating material composition of the present disclosure contains a fluororesin (A). Fluororesins are resins that have fluorine atoms in some parts. Fluororesins are resins that are excellent in low friction, and are therefore particularly suited for the purpose of the present disclosure. The fluororesin (A) used in the coating material composition of the present disclosure contains a high molecular weight polytetrafluoroethylene (A-1), at least as part. The use of such a fluororesin provides a particularly preferred effect in that a coating film that achieves both insulation and abrasion resistance can be formed.

### (High molecular weight polytetrafluoroethylene (A-1))

In the resin composition of the present disclosure, a part or the whole of the fluororesin (A) is a high molecular weight polytetrafluoroethylene (hereinafter sometimes referred to as high molecular weight PTFE) (A-1). High molecular weight PTFE means PTFE that is non-melt-fabricable and fibrillatable.

The above non-melt-fabricability means the property that the melt flow rate cannot be measured at temperatures higher than the crystallization melting point in accordance with ASTM D-1238 and D-2116.

The presence or absence of fibrillatability can be determined by "paste extrusion", which is a representative method of forming "high molecular weight PTFE powder", which is powder made from a polymer of TFE. Normally, paste extrusion is possible because high molecular weight PTFE is fibrillatable. When an unfired formed product obtained by paste extrusion has no substantial strength or elongation, for example, when it has 0% elongation and breaks when pulled, it can be regarded as having no fibrillatability.

The above high molecular weight PTFE preferably has a standard specific gravity (SSG) of 2.130 to 2.280. The lower limit of the above standard specific gravity is more preferably 2.135 and still more preferably 2.140. The upper limit of the above standard specific gravity is more preferably 2.275 and still more preferably 2.270. The above standard specific gravity is measured by the water displacement method in accordance with ASTM D-792, using a sample formed in accordance with ASTM D4895-89. Since the standard specific gravity of resins corresponds to the molecular weight, those within the above range can be said to be high molecular weight PTFE.

Such high molecular weight PTFE is known and can be obtained by known methods. Commercially available products can also be used.

### (Copolymer (A-2))

The coating material composition of the present disclosure preferably further contains one or more copolymers (A-2) composed of tetrafluoroethylene, and hexafluoropropylene and/or a perfluoroalkyl vinyl ether as part of the fluororesin (A). By containing this, a preferred effect is obtained from the viewpoint that a coating film with fewer defects, such as pinholes, can be formed.

In the present disclosure, the "perfluoro(alkyl vinyl ether)" (PAVE) is an alkyl vinyl ether that is free of C-H bonds.

Examples of the above PAVE constituting PAVE units include at least one selected from the group consisting of a monomer represented by general formula (1):

CF₂=CFO(CF₂CFY¹O)ₚ-(CF₂CF₂CF₂O)_{q}-Rf (1)

wherein Y¹ represents F or CF₃; Rf represents a perfluoroalkyl group having 1 to 5 carbon atoms; p represents an integer of 0 to 5; and q represents an integer of 0 to 5, and a monomer represented by general formula (2):

CFX=CXOCF₂OR¹ (2)

wherein X is the same or different and represents H, F, or CF₃; and R1 represents a linear or branched fluoroalkyl group having 1 to 6 carbon atoms and optionally containing 1 to 2 atoms of at least one type selected from the group consisting of H, Cl, Br, and I, or a cyclic fluoroalkyl group having 5 or 6 carbon atoms and optionally containing 1 to 2 atoms of at least one type selected from the group consisting of H, Cl, Br, and I.

In particular, the above PAVE is preferably a monomer represented by the general formula (1), more preferably at least one selected from the group consisting of perfluoro(methyl vinyl ether), perfluoro(ethyl vinyl ether), and perfluoro(propyl vinyl ether) (PPVE), and still more preferably PPVE.

The content of PAVE units in the above TFE/PAVE copolymer is preferably 1.0 to 10% by mass, more preferably 2.0% by mass or more, and still more preferably 3.5% by mass or more, and is more preferably 8.0% by mass or less, still more preferably 7.0% by mass or less, particularly preferably 6.5% by mass or less, and most preferably 6.0% by mass or less, relative to the entire monomer units. Note that the above amount of PAVE units is measured by the 19F-NMR method. The above TFE/PAVE copolymer may be a copolymer composed solely of TFE units and PAVE units.

When the above copolymer (A-2) is a TFE/PAVE copolymer, the melting point is preferably 280 to 322°C, and more preferably 290°C or higher, and is more preferably 320°C or lower.

When the above copolymer (A-2) is a TFE/PAVE copolymer, the glass transition temperature (Tg) is preferably 70 to 110°C, and more preferably 80°C or higher, and is more preferably 100°C or lower. The above glass transition temperature is a value obtained by dynamic viscoelasticity measurement.

The content of HFP units in the above TFE/HFP copolymer is preferably 5 to 30% by mass, more preferably 10% by mass or more, and still more preferably 15% by mass or more, and is more preferably 25% by mass or less, relative to the entire monomer units. Note that the above amount of HFP units can be measured by the 19F-NMR method.

The above TFE/HFP copolymer can further contain (per) fluoro(alkyl vinyl ether) (PAVE) units. Examples of the PAVE units contained in the above TFE/HFP copolymer include those similar to the PAVE units described above. The TFE/PAVE copolymer described above is free of HFP units, and thus differs from the TFE/HFP/PAVE copolymer in that respect.

When the above TFE/HFP copolymer is a copolymer containing TFE units, HFP units, and PAVE units (hereinafter also referred to as "TFE/HFP/PAVE copolymer"), the mass ratio (TFE/HFP/PAVE) is preferably 70 to 99.8/0.1 to 25/0.1 to 25 (% by mass). The above mass ratio (TFE/HFP/PAVE) is more preferably 75 to 98/1.0 to 25/1.0 to 10 (% by mass). The above TFE/HFP/PAVE copolymer preferably contains 1% by mass or more of HFP units and PAVE units in total relative to the entire monomer units.

In the above TFE/HFP/PAVE copolymer, HFP units are preferably 25% by mass or less relative to the entire monomer units. The content of HFP units is more preferably 20% by mass or less. Also, the content of HFP units is preferably 0.1% by mass or more, more preferably 1% by mass or more, and particularly preferably 2% by mass or more. Note that the content of HFP units can be measured by the 19F-NMR method.

The content of PAVE units is more preferably 20% by mass or less, still more preferably 10% by mass or less, and particularly preferably 3% by mass or less. Also, the content of PAVE units is preferably 0.1% by mass or more, and more preferably 1% by mass or more. Note that the content of PAVE units can be measured by the 19F-NMR method.

The above TFE/PAVE copolymer and the above TFE/HFP copolymer may further contain other ethylenic monomer (α) units. The other ethylenic monomer (α) units are not limited as long as they are monomer units that are copolymerizable with TFE, HFP, and PAVE, and examples thereof include fluorine-containing ethylenic monomers such as vinyl fluoride (VF), vinylidene fluoride (VdF), trifluoroethylene (TrFE), and chlorotrifluoroethylene (CTFE), and non-fluorinated ethylenic monomers such as ethylene, propylene, and alkyl vinyl ethers. The content of the other ethylenic monomer (α) units is preferably 0 to 25% by mass, and more preferably 0.1 to 25% by mass.

When the above copolymer (A-2) is a TFE/HFP/PAVE/other ethylenic monomer (α) copolymer, the mass ratio (TFE/HFP/PAVE/other ethylenic monomer (α)) is preferably 70 to 98/0.1 to 25/0.1 to 25/0.1 to 25 (% by mass). The above TFE/HFP/PAVE/other ethylenic monomer (α) copolymer preferably contains 1% by mass or more of monomer units other than TFE units in total.

The melting point of the above TFE/HFP copolymer is preferably 200 to 322°C, more preferably higher than 200°C, and still more preferably 210°C or higher, and is more preferably 300°C or lower, and still more preferably 280°C or lower.

The glass transition temperature (Tg) of the above TFE/HFP copolymer is preferably 60 to 110°C, and more preferably 65°C or higher, and is more preferably 100°C or lower. The above glass transition temperature is a value obtained by dynamic viscoelasticity measurement.

The above polymer (A-2) can be produced by, for example, conventionally known methods such as mixing monomers that serve as its constituent units and additives such as a polymerization initiator as appropriate, and then performing emulsion polymerization or suspension polymerization. In particular, the above polymer (A-2) is more preferably one obtained by emulsion polymerization.

The above polymer (A-2) preferably has a value of MFR within the range of 1 to 30 (g/10 min) as measured at 372°C with a load of 5 kg. Such a range is preferable since it is easier to obtain the amount of functional groups as described above by the terminal functional groups. The lower limit of the above MFR is more preferably 3 (g/10 min) and still more preferably 10 (g/10 min). The upper limit of the above MFR is more preferably 28 (g/10 min) and still more preferably 25 (g/10 min).

In the coating material composition of the present disclosure, the mass ratio between the high molecular weight polytetrafluoroethylene (A-1) and the copolymer (A-2) is preferably (A-1)/(A-2) = 10/90 to 90/10. The lower limit of the above mass ratio is more preferably 10.5/89.5 and still more preferably 11/89. The upper limit of the above mass ratio is more preferably 89.5/10.5 and still more preferably 89/11. When the above mass ratio is within such a range, a coating film with fewer defects, such as pinholes, that is excellent in insulation and abrasion resistance can be formed, which is preferable.

### (Polyamideimide resin and/or epoxy resin (B))

The coating material composition of the present disclosure contains a polyamideimide resin and/or epoxy resin. This is preferable in that it enables formation of a coating film that is excellent in adhesion to the substrate. The polyamideimide resin and/or epoxy resin that can be used in the present disclosure will be described in detail below.

### (Polyamideimide resin)

The polyamideimide resin is a resin typically obtained by a reaction of an acid component and a diisocyanate component, and has a structural moiety derived from the acid component and a structural moiety derived from the diisocyanate component.

### (Acid component)

The acid component is not limited and includes at least an aromatic tribasic acid anhydride and/or an aromatic tribasic acid halide. In one embodiment, the acid component preferably contains at least an aromatic tribasic acid anhydride, and more preferably contains trimellitic acid anhydride among them. Therefore, in one embodiment, the polyamideimide resin preferably has the structure represented by the following general formula (I) .

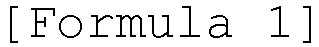

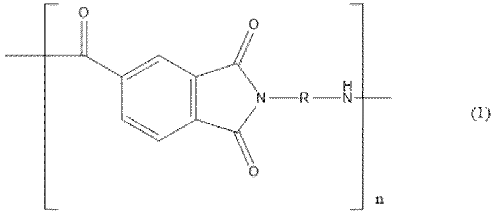

In the structure represented by formula (1), R is an organic group (structural moiety) derived from the diisocyanate component, and n is an integer of 1 or more.

The content of trimellitic anhydride is preferably 50% by mole or more based on the total amount (100% by mole) of acid components constituting the polyamideimide resin. In one embodiment, the content of the trimellitic anhydride may be 100% by mole.

In other embodiments, the content of trimellitic anhydride may be 50% by mole to 95% by mole, and 5% by mole to 50% by mole of other acid components may be contained based on the total amount (100% by mole) of acid components constituting the polyamideimide resin.

For example, a dicarboxylic acid may be used as the other acid component. As the dicarboxylic acid, for example, succinic acid, glutaric acid, adipic acid, pimelic acid, suberic acid, azelaic acid, sebacic acid, phthalic acid, isophthalic acid, and terephthalic acid may be used.

These compounds may also be used singly or in combinations of two or more thereof.

### (Diisocyanate component)

The diisocyanate component preferably contains at least an aromatic diisocyanate. Therefore, in one embodiment, R is preferably an organic group derived from the aromatic diisocyanate in formula (I). The content of the aromatic diisocyanate is preferably 30% by mole or more and more preferably 40% by mole or more based on the total amount (100% by mole) of diisocyanate components constituting the polyamideimide resin. In one embodiment, the content of the aromatic diisocyanate may be 100% by mole.

The aromatic diisocyanate contains one or more selected from the group consisting of 4,4'-diphenylmethane diisocyanate, 3,3'-dimethyl-4,4'-diisocyanatobiphenyl, 2,4-toluene diisocyanate, and 2,6-toluene diisocyanate. Among the aromatic diisocyanates, 4,4'-diphenylmethane diisocyanate is preferred.

Therefore, the content of the aromatic diisocyanate containing 4,4'-diphenylmethane diisocyanate is preferably 30% by mole or more, and more preferably 40% by mole or more, and may be 100% by mole, based on the total amount of diisocyanate components constituting the polyamideimide resin.

In one embodiment, the content of 4,4'-diphenylmethane diisocyanate, based on the total amount of diisocyanate components constituting the polyamideimide resin may be 100% by mole. In other embodiments, the content of 4,4'-diphenylmethane diisocyanate, based on the total amount of diisocyanate components constituting the polyamideimide resin, may be 30% by mole to 95% by mole, and the content of other aromatic diisocyanates may be 5% by mole to 70% by mole.

In the coating material composition of the present disclosure, the polyamideimide resin preferably has a number-average molecular weight of 10,000 to 40,000. The use of those within such a range is preferable in that it enables formation of a coating film that is excellent in adhesion to the substrate.

The lower limit of the number-average molecular weight is preferably 12,000, and more preferably 14,000 or more. The upper limit of the number-average molecular weight is preferably 37,000, and more preferably 33,000.

The number-average molecular weight of the polyamideimide resin herein is a value measured by a gel permeation chromatograph (GPC).

### (Epoxy resin)

In the present disclosure, the epoxy resin is a compound having two or more oxirane rings (epoxy groups) in the molecule.

The epoxy resin is not limited, and any known epoxy resin may be used. Specific examples thereof include bisphenol A type epoxy resin, bisphenol F type epoxy resin, brominated epoxy resin, bisphenol S type epoxy resin, diphenyl ether type epoxy resin, hydroquinone type epoxy resin, naphthalene type epoxy resin, biphenyl type epoxy resin, fluorene type epoxy resin, bisphenol A novolac-based epoxy resin, phenol novolac type epoxy resin, ortho-cresol novolac type epoxy resin, dicyclopentadiene phenol type epoxy resin, trishydroxyphenylmethane type epoxy resin, trifunctional epoxy resin, tetraphenylolethane type epoxy resin, tetrafunctional epoxy resin, hydrogenated bisphenol A type epoxy resin, bisphenol A nucleated polyol type epoxy resin, polypropylene glycol type epoxy resin, glycidyl ester type epoxy resin, glycidylamine type epoxy resin, glyoxal type epoxy resin, alicyclic epoxy resin, alicyclic multifunctional epoxy compound, and heterocyclic epoxy resin such as triglycidyl isocyanate (TGIC).

The above epoxy resin preferably has a number-average molecular weight of 200 to 2,000. The lower limit of the above number-average molecular weight is preferably 250 and still more preferably 300 or more. The upper limit of the above number-average molecular weight is preferably 2,400 and still more preferably 2,200.

The number-average molecular weight of the epoxy resin herein is a value as measured by gel permeation chromatography (GPC).

### (Compounding proportion)

In the coating material composition of the present disclosure, the mass ratio between the fluororesin (A) and the polyamideimide resin is preferably fluororesin (A) /polyamideimide resin = 40/60 to 70/30. The lower limit of the above mass ratio is more preferably 41/59 and still more preferably 42/58. The upper limit of the above mass ratio is more preferably 69/31 and still more preferably 68/32. When the above mass ratio is within such a range, a coating film that is excellent in insulation, abrasion resistance, and adhesion to the substrate can be formed, which is preferable.

In the coating material composition of the present disclosure, the mass ratio between the fluororesin (A) and the epoxy resin is preferably fluororesin (A)/epoxy resin = 30/70 to 70/30. The lower limit of the above mass ratio is more preferably 31/69 and still more preferably 32/68. The upper limit of the above mass ratio is more preferably 69/31 and still more preferably 68/32. When the above mass ratio is within such a range, a coating film that is excellent in insulation, abrasion resistance, and adhesion to the substrate can be formed, which is preferable.

When the coating material composition of the present invention contains both polyamideimide resin and epoxy resin, the mass ratio between fluororesin (A) and polyamideimide resin and epoxy resin (B) is preferably fluororesin (A)/(B) = 40/60 to 70/30.

### (Organic solvent (C))

The coating material composition of the present disclosure contains an organic solvent (C). In the present disclosure, the above fluororesin (A), and polyamideimide resin and/or epoxy resin (B) are preferably dissolved and/or dispersed in the organic solvent. More specifically, the coating material composition is preferably in a state where the polyamideimide resin and/or epoxy resin (B) is dissolved in the organic solvent (C) and the fluororesin (A), which is difficult to be dissolved in the solvent, is dispersed.

Forming a coating film with such a composition is preferable in that a uniform coating film can be formed and the low friction and other properties possessed by the fluororesin can be fully demonstrated.

The organic solvent (C) that can be used in the present disclosure is preferably one that can dissolve the polyamideimide resin or epoxy resin and one that can easily disperse the fluororesin. Examples thereof include N-methylpyrrolidone, N-ethyl-2-pyrrolidone (NEP), 3-methoxy-N,N-dimethylpropanamide, N-butyl-2-pyrrolidone (NBP), methyl ethyl ketone, methyl isobutyl ketone, and diisobutyl ketone.

The above organic solvent (C) may be a mixed solvent in which two or more of the organic solvents described above are mixed, or may contain other organic solvents or water to the extent that the purpose described above is not hindered.

In the above organic solvent (C), each of the components (A) and (B) described above is present in a dispersed or dissolved state.

The coating material composition of the present disclosure preferably contains the above organic solvent (C) at a proportion of 50 to 90 (% by mass) relative to the total amount of composition. The lower limit of the above content is more preferably 55% by mass and still more preferably 60% by mass. The upper limit of the above content is more preferably 85% by mass and still more preferably 80% by mass.

### (Other components)

The coating material composition of the present disclosure may be a composition composed solely of the fluororesin (A), the polyamideimide resin and/or epoxy resin (B), and the organic solvent (C), or it may further contain other components as necessary.

Examples of the other components that can be compounded include water, a filler, and a coloring agent.

### (Viscosity)

The coating material composition of the present disclosure preferably has a viscosity of 100 to 40,000 cps. The viscosity within the range renders workability favorable in a coating step. Furthermore, it is also preferable in terms of obtaining a predetermined film thickness.

The viscosity described above is the value measured at 25°C using a B-type viscometer as described in JISZ8803. The above lower limit for a coating material used for spray painting and the like is more preferably 110 cps and further preferably 120 cps. The above upper limit is preferably 3,000 cps and further preferably 2,500 cps. The above lower limit for a coating material used for dispensers and roll coating is more preferably 4,000 cps and further preferably 5,000 cps. The upper limit of the viscosity is more preferably 38,000 cps and still more preferably 35,000 cps.

The viscosity can be set within the aforementioned range by appropriately adjusting the compositional features of the coating material composition, the amount of the solvent to be compounded, a molecular weight of the component dissolved in the solvent among the resin to be used, and the like.

### (Production method of coating material)

The coating material composition of the present disclosure can be produced by mixing the aforementioned components. The aggregates can be appropriately pulverized by using various types of known mills such as a bead mill, a ball mill, and a three-roll, and these mills may be appropriately combined as necessary, and by adjusting crushing conditions, crushing time, and a compounding ratio of the resin components combined for use, or the like.

### (Coating film)

The coating film formed of the coating material composition of the present disclosure is an object of the present disclosure as well. The coating film can be formed by general methods.

The coating film of the present disclosure preferably has a coefficient of friction of 0.4 or less as measured by the method described in Examples herein. With such abrasion resistance, the coating film can be made to have an excellent strength and durability, and can be a coating film applicable for applications requiring sliding. It is noted that the coefficient of friction refers to the value measured by the method described in Examples. The above coefficient of friction is preferably less than 0.3 and further preferably less than 0.2.

The coating film of the present disclosure preferably has abrasion resistance index of 500 or more, as measured by the method described in Examples herein. The coating film of the present disclosure can be a coating film that can maintain the sliding over a long period of time, and a coating film applicable for applications requiring the sliding. Note that the sliding durability refers to the value measured by the method described in Examples. The abrasion resistance index is more preferably 600 or more and further preferably 700 or more.

The coating film of the present disclosure preferably has a film thickness of 5 to 120 µm as measured by the method described in Examples herein. The lower limit of the above film thickness is more preferably 10 µm and still more preferably 15 µm. The upper limit of the above film thickness is more preferably 110 µm and still more preferably 105 µm. When the above film thickness is within such a range, a coating film with fewer defects, such as pinholes and coating film foams, that is excellent in insulation and abrasion resistance can be formed, which is preferable.

### (Applications of coating material composition)

The applications to which the coating material composition of the present disclosure can be applied are not limited, and examples thereof include, in addition to coating of bearings for electric automobiles, industrial products such as rolls for office automation (OA), belts for OA, separation claws for OA, papermaking rolls, and calender rolls for film production; injection molds, and molds and templates for molding styrene foam, etc.; molding mold release such as mold release plates for producing plywood and decorative sheets; industrial containers (especially for the semiconductor industry); tools such as saws and files; household articles such as irons, scissors, and knives; metal foil; electric wires; slide bearings for food processing machines, packaging machines, spinning and weaving machines, and other machines; sliding parts for cameras and watches; automotive parts such as pipes, valves, and bearings; snow shovels; plows; and chutes. The coating material composition of the present disclosure can be used particularly suitably for coating of bearings for electric automobiles.

The present disclosure is also a coating film obtained by using the coating material composition described above, as well as an article and a bearing having such a film. Furthermore, the present disclosure is also an article having the bearing described above. Examples of such an article include transportation equipment such as automobiles, industrial equipment such as machine tools and semiconductor manufacturing facilities, and power generation equipment such as wind turbine generators. In particular, it can be used suitably in equipment where a large current flows through the bearing.

### Examples

The present disclosure will be specifically described based on Examples below. It is noted that "%" and "parts" in the table refer to "% by mass" and "parts by mass," respectively.

### [Examples 1 to 9 and Comparative Examples 1 to 7]

The respective components shown in Table 1 were compounded in predetermined amounts, and the various resin raw materials were dispersed in a mixed solvent of N-methylpyrrolidone and methyl isobutyl ketone (mixing ratio: 7/3) using a stirring mill to obtain coating material compositions. The proportion of the mixed solvent in the total amount of coating material composition was 75% (mass ratio). The properties of the films formed of these coating material compositions are shown in Table 1.

Note that each of the components in the table is as follows.

High molecular weight PTFE: PTFE that is non-melt-fabricable and fibrillatable. Standard specific gravity: 2.170.

Low molecular weight PTFE: PTFE that is non-melt-fabricable and non-fibrillatable. Unable to form a sample for measuring the standard specific gravity.

TFE/HFP copolymer: TFE/HFP = 78/22 (% by mass). Melting point: 218°C. MFR: 17 (g/10 min).

TFE/PPVE copolymer: TFE/PPVE = 96/4(% by mass). Melting point: 314°C. MFR: 24 (g/10 min).

TFE/HFP/PPVE copolymer: TFE/HFP/PPVE = 79/19/2 (% by mass). Melting point: 256°C. MFR: 21 (g/10 min).

Polyamideimide resin molecular weight 15,000: trimellitic anhydride-4,4'-diphenylmethane diisocyanate polycondensate.

Polyamideimide resin molecular weight 25,000: trimellitic anhydride-4,4'-diphenylmethane diisocyanate polycondensate.

Polyamideimide resin molecular weight 30,000: trimellitic anhydride-4,4'-diphenylmethane diisocyanate polycondensate.

Epoxy resin molecular weight 340: bisphenol A type epoxy resin.

Epoxy resin molecular weight 800: bisphenol A type epoxy resin.

Epoxy resin molecular weight 2,000: bisphenol A type epoxy resin.

### (Molecular weight of polyamideimide resin)

The molecular weight of the polyamideimide resin was a value as measured by gel permeation chromatography (GPC). GEL PERMEATION CHROMATOGRAPH HLC-8020 manufactured by Tosoh Corporation as an apparatus, Shodex GPC KD-806M manufactured by Showa Denko K.K. as a column, and dimethyl formamide (DMF) and tetrahydrofuran as solvents were used.

### (Molecular weight of epoxy resin)

The molecular weight of the epoxy resin was a value as measured by gel permeation chromatography (GPC). GEL PERMEATION CHROMATOGRAPH HLC-8020 manufactured by Tosoh Corporation as an apparatus, Shodex GPC KF-803L manufactured by Showa Denko K.K. as a column, and tetrahydrofuran (THF) as a solvent were used.

### (Coating method)

The above coating materials were applied to a SUS304 substrate on which a degreasing treatment and a blasting treatment had been performed.

In Tables 1 and 2, the films were formed by drying at 100°C for 30 minutes and then heating at 280°C for 30 minutes. In Tables 3 and 4, the coating films formed by drying at 100°C for 30 minutes and then heating at 180°C for 30 minutes were obtained.

For the obtained coating films, evaluations were performed according to the following methods.

### (Film thickness)

The film thickness of the coating film was measured using an eddy-current coating thickness tester (manufactured by Kett Electric Laboratory Co., Ltd.).

### (Dielectric breakdown voltage (kV))

The dielectric breakdown voltage of the coating film was measured using the dielectric breakdown tester YST-243-100RHO (manufactured by Yamayo Shikenki, Ltd.) in accordance with JIS C2110-1 under the following conditions: AC boost method (short time method, 50 Hz), measurement temperature: 23°C, ambient medium: insulating oil, and test electrode: Φ20 sphere/Φ25 cylinder.

### (Coefficient of friction)

The coefficient of friction of the coating film was measured using the friction abrasion tester Tribogear 38 (manufactured by SHINTO Scientific Co., Ltd.) under the following conditions: Bowden-Leben type, steel ball 8 mmΦ, linear velocity: 0.27 cm/sec, and load: 1 kgf.

### (Adhesion to substrate SAICAS (kN/m))

The adhesive strength to the substrate was measured using the surface and interfacial cutting analysis system SAICAS (manufactured by Daipla Wintes Co., Ltd.).

### (Abrasion resistance index)

Using the friction abrasion tester Friction Player FPR2200 (manufactured by Rhesca Co., Ltd.), the period of time until the coating film was abraded by 10 µm was measured by reciprocating sliding with a mating material: Φ5 mm zirconia ball, load: 2 kgf, linear velocity: 20 mm/sec, and travel distance: 10 mm. Note that the abrasion resistance index was obtained in Tables 1 and 2 as the index when Comparative Example 2 was set to 100, and in Tables 3 and 4 as the index when Comparative Example 5 was set to 100.

**[Table 1]**

| | | MFR (g/10 min) | Number-average molecular weight | Compar ative Example 1 | Compar ative Exampl e 2 | Exa mple 1 | Compa rative Exampl e 3 | Compa rative Exampl e 4 | Exa mple 2 | Exa mple 3 | Exa mple 4 | Exam ple 5 | Exa mple 6 |
|---|---|---|---|---|---|---|---|---|---|---|---|---|---|
| Fluoro resin | High molecular weight PTFE | - | - | 20 | | 51 | | | 10 | 10 | 10 | 10 | 10 |
| | Low molecular weight PTFE | - | - | | | | 51 | | | | | | |
| | TFE/HFP copolymer | 2 | - | | | | | | 41 | | | | |
| | | 16 | - | 80 | | | | 51 | | 41 | | | |
| | | 25 | - | | | | | | | | 41 | | |
| | TFE/PPVE copolymer | 23 | - | | | | | | | | | 41 | |
| | TFE/HFP/PP VE copolymer | 20 | - | | | | | | | | | | 41 |
| Polyamideimide resin | | | 15,000 | | | | | | | | | | |
| | | | 25,000 | | 100 | 49 | 49 | 49 | 49 | 49 | 49 | 49 | 49 |
| | | | 30,000 | | | | | | | | | | |
| Epoxy resin | | | 200 | | | | | | | | | | |
| | | | 800 | | | | | | | | | | |
| | | | 2000 | | | | | | | | | | |
| Film thickness (µm) | | | | 50 | 50 | 50 | 50 | 50 | 50 | 50 | 50 | 50 | 50 |
| Coatin g film proper ties | Dielectric breakdown voltage (kV) | | | Unmeas urable | 4 | 3.3 | 2.3 | 5.2 | 3.9 | 4.9 | 3.7 | 4.6 | 4.8 |
| | Coefficient of friction | | | Unmeas urable | 0.4 | 0.1 | 0.1 | 0.1 | 0.1 | 0.1 | 0.1 | 0.1 | 0.1 |
| | Adhesion to substrate SAICAS (kN/m) | | | Peeled off | 0.6 | 0.5 | 0.5 | 0.5 | 0.5 | 0.5 | 0.5 | 0.5 | 0.5 |
| | Abrasion resistance index | | | Unmeas urable | 100 | 1300 | 380 | 400 | 920 | 900 | 830 | 820 | 820 |

**[Table 2]**

| | | MFR (g/10 min) | Number-average molecula r weight | Exam ple 7 | Exam ple 8 | Exam ple 9 | Exam ple 10 | Exam ple 11 | Exam ple 12 | Exam ple 13 | Exam ple 14 | Exam ple 15 |
|---|---|---|---|---|---|---|---|---|---|---|---|---|
| Fluoro resin | High molecular weight PTFE | - | - | 6 | 26 | 45 | 11 | 13 | 10 | 10 | 10 | 10 |
| | Low molecular weight PTFE | - | - | | | | | | | | | |
| | TFE/HFP copolymer | 2 | - | | | | | | | | | |
| | | 16 | - | 45 | 25 | 6 | 44 | 52 | 41 | 41 | 41 | 41 |
| | | 25 | - | | | | | | | | | |
| | TFE/PPVE copolymer | 23 | - | | | | | | | | | |
| | TFE/HFP/PPVE copolymer | 20 | - | | | | | | | | | |
| Polyamideimide resin | | | 15,000 | | | | | | 49 | | | |
| | | | 25,000 | 49 | 49 | 49 | 45 | 35 | | | 49 | 49 |
| | | | 30,000 | | | | | | | 49 | | |
| Epoxy resin | | | 200 | | | | | | | | | |
| | | | 800 | | | | | | | | | |
| | | | 2000 | | | | | | | | | |
| Film thickness (µm) | | | | 50 | 50 | 50 | 50 | 50 | 50 | 50 | 20 | 100 |
| Coatin g film proper ties | Dielectric breakdown voltage (kV) | | | 5 | 3.7 | 3.3 | 4.3 | 5.2 | 4.8 | 4.7 | 3.1 | 7.2 |
| | Coefficient of friction | | | 0.1 | 0.1 | 0.1 | 0.13 | 0.1 | 0.1 | 0.1 | 0.1 | 0.1 |
| | Adhesion to substrate SAICAS (kN/m) | | | 0.5 | 0.5 | 0.5 | 0.5 | 0.4 | 0.4 | 0.6 | 0.5 | 0.5 |
| | Abrasion resistance Taber abrasion (mg) | | | 800 | 1000 | 1180 | 860 | 840 | 880 | 930 | 900 | 900 |

**[Table 3]**

| | | MFR (g/10 min) | Number-average molecular weight | Compar ative Exampl e 5 | Exa mple 16 | Compar ative Exampl e 6 | Compar ative Exampl e 7 | Exa mple 17 | Exa mple 18 | Exa mple 19 | Exa mple 20 | Exam ple 21 | Exa mple 22 |
|---|---|---|---|---|---|---|---|---|---|---|---|---|---|
| Fluoror esin | High molecular weight PTFE | - | - | | 50 | | | 10 | 10 | 10 | 10 | 10 | 6 |
| | Low molecular weight PTFE | - | - | | | 50 | | | | | | | |
| | TFE/HFP copolymer | 2 | - | | | | | 40 | | | | | |
| | | 16 | - | | | | 50 | | 40 | | | | 44 |
| | | 25 | - | | | | | | | 40 | | | |
| | TFE/PPVE copolymer | 23 | - | | | | | | | | 40 | | |
| | TFE/HFP/PP VE copolymer | 20 | - | | | | | | | | | 40 | |
| Polyamideimide resin | | | 15,000 | | | | | | | | | | |
| | | | 25,000 | | | | | | | | | | |
| | | | 30,000 | | | | | | | | | | |
| Epoxy resin | | | 200 | | | | | | | | | | |
| | | | 800 | 100 | 50 | 50 | 50 | 50 | 50 | 50 | 50 | 50 | 50 |
| | | | 2000 | | | | | | | | | | |
| Film thickness (µm) | | | | 50 | 50 | 50 | 50 | 50 | 50 | 50 | 50 | 50 | 50 |
| Coatin g film propert ies | Dielectric breakdown voltage (kV) | | | 3.2 | 3.1 | 2 | 5 | 3.7 | 4.5 | 3.5 | 4.3 | 4.3 | 4.7 |
| | Coefficient of friction | | | 0.4 | 0.1 | 0.1 | 0.1 | 0.1 | 0.1 | 0.1 | 0.1 | 0.1 | 0.1 |
| | Adhesion to substrate SAICAS (kN/m) | | | 0.8 | 0.6 | 0.6 | 0.6 | 0.6 | 0.6 | 0.6 | 0.6 | 0.6 | 0.6 |
| | Abrasion resistance index | | | 100 | 1280 | 360 | 370 | 920 | 900 | 840 | 820 | 820 | 800 |

**[Table 4]**

| | | MFR (g/10 min) | Number-average molecular weight | Exam ple 23 | Exam ple 24 | Exam ple 25 | Exam ple 26 | Exam ple 27 | Exam ple 28 | Exam ple 29 | Exam ple 30 |
|---|---|---|---|---|---|---|---|---|---|---|---|
| Fluoror esin | High molecular weight PTFE | - | - | 25 | 44 | 7 | 13 | 10 | 10 | 10 | 10 |
| | Low molecular weight PTFE | - | - | | | | | | | | |
| | TFE/HFP copolymer | 2 | - | | | | | | | | |
| | | 16 | - | 25 | 6 | 28 | 52 | 40 | 40 | 40 | 40 |
| | | 25 | - | | | | | | | | |
| | TFE/PPVE copolymer | 23 | - | | | | | | | | |
| | TFE/HFP/PPVE copolymer | 20 | - | | | | | | | | |
| Polyamideimide resin | | | 15,000 | | | | | | | | |
| | | | 25,000 | | | | | | | | |
| | | | 30,000 | | | | | | | | |
| Epoxy resin | | | 200 | | | | | 50 | | | |
| | | | 800 | 50 | 50 | 65 | 35 | | | 50 | 50 |
| | | | 2000 | | | | | | 50 | | |
| Film thickness (µm) | | | | 50 | 50 | 50 | 50 | 50 | 50 | 20 | 100 |
| Coatin g film propert ies | Dielectric breakdown voltage (kV) | | | 4.1 | 3.7 | 4 | 4.8 | 4.2 | 4.2 | 3.2 | 6.9 |
| | Coefficient of friction | | | 0.1 | 0.1 | 0.15 | 0.1 | 0.1 | 0.1 | 0.1 | 0.1 |
| | Adhesion to substrate SAICAS (kN/m) | | | 0.6 | 0.6 | 0.7 | 0.4 | 0.5 | 0.7 | 0.6 | 0.6 |
| | Abrasion resistance index | | | 1020 | 1200 | 840 | 820 | 800 | 960 | 900 | 900 |

Note that, in each of the above tables, the numerical values of the amounts compounded are in % by mass.

From the results in the above Tables 1 to 5, it is clear that the coating material compositions of the present disclosure are excellent in insulation and abrasion resistance, and have a particularly suitable effect for coating of bearings for electric automobiles.

### Industrial Applicability

The coating material composition of the present disclosure can be used suitably for coating of bearings for electric automobiles and others.

## Claims

1. A coating material composition comprising: a fluororesin (A) containing a high molecular weight polytetrafluoroethylene (A-1) as a part or as a whole; a polyamideimide resin and/or epoxy resin (B); and an organic solvent (C).

2. The coating material composition according to claim 1, wherein the fluororesin (A) further contains one or more copolymers (A-2) composed of tetrafluoroethylene, and hexafluoropropylene and/or a perfluoroalkyl vinyl ether.

3. The coating material composition according to claim 2, wherein the copolymer (A-2) has a melt flow rate of 1 to 30 (g/10 min).

4. The coating material composition according to claim 2 or 3, wherein the mass ratio between the high molecular weight polytetrafluoroethylene (A-1) and the copolymer (A-2) is (A-1)/(A-2) = 10/90 to 90/10.

5. The coating material composition according to any one of claims 1 to 4, wherein the mass ratio between the fluororesin (A) and the polyamideimide resin is fluororesin (A) /polyamideimide resin = 40/60 to 70/30.

6. The coating material composition according to any one of claims 1 to 5, wherein the polyamideimide resin has a number-average molecular weight of 10,000 to 40,000.

7. The coating material composition according to any one of claims 1 to 6, wherein the mass ratio between the fluororesin (A) and the epoxy resin is fluororesin (A)/epoxy resin = 30/70 to 70/30.

8. The coating material composition according to any one of claims 1 to 7, wherein the epoxy resin has a number-average molecular weight of 200 to 2,500.

9. The coating material composition according to claim 1, wherein the polyamideimide resin and/or epoxy resin (B) is a polyamideimide resin, wherein the fluororesin (A) further contains one or more copolymers (A-2) composed of tetrafluoroethylene, and hexafluoropropylene and/or a perfluoroalkyl vinyl ether, wherein the copolymer (A-2) has a melt flow rate of 1 to 30 (g/10 min), wherein the mass ratio between the high molecular weight polytetrafluoroethylene (A-1) and the copolymer (A-2) is (A-1)/(A-2) = 5/95 to 55/45, wherein the mass ratio between the fluororesin (A) and the polyamideimide resin is fluororesin (A) /polyamideimide resin = 40/60 to 70/30, and wherein the polyamideimide resin has a number-average molecular weight of 10,000 to 40,000.

10. The coating material composition according to claim 1, wherein the polyamideimide resin and/or epoxy resin (B) is an epoxy resin, wherein the fluororesin (A) further contains one or more copolymers (A-2) composed of tetrafluoroethylene, and hexafluoropropylene and/or a perfluoroalkyl vinyl ether, wherein the copolymer (A-2) has a melt flow rate of 1 to 30 (g/10 min), wherein the mass ratio between the high molecular weight polytetrafluoroethylene (A-1) and the copolymer (A-2) is (A-1)/(A-2) = 5/95 to 55/45, wherein the mass ratio between the fluororesin (A) and the epoxy resin is fluororesin (A)/epoxy resin = 30/70 to 70/30, and wherein the epoxy resin has a number-average molecular weight of 200 to 2,000.

11. A film formed of the coating material composition according to any one of claims 1 to 10.

12. An article having the film according to claim 11.

13. A bearing having the film according to claim 11.

14. An article having the bearing according to claim 11.
